**Europäisches Patentamt**

(19) **European Patent Office**

**Office européen des brevets**

(11) Numéro de publication: **0 088 662**
**B1**

## FASCICULE DE BREVET EUROPÉEN

(45) Date de publication du fascicule du brevet:
10.06.87

(51) Int. Cl.⁴: **G 11 B 7/08**

(21) Numéro de dépôt: **83400360.0**

(22) Date de dépôt: **22.02.83**

(54) **Dispositif associé à une tête optique d'écriture-lecture d'un disque optique.**

(30) Priorité: **02.03.82 FR 8203425**

(43) Date de publication de la demande:
**14.09.83 Bulletin 83/37**

(45) Mention de la délivrance du brevet:
**10.06.87 Bulletin 87/24**

(84) Etats contractants désignés:
**DE GB IT NL SE**

(56) Documents cité:
**EP-A-0 002 547**
**EP-A-0 012 650**
**FR-A-2 262 849**
**FR-A-2 434 457**
**FR-A-2 437 042**
**FR-A-2 455 331**
**FR-A-2 484 683**
**US-A-4 092 529**
**US-A-4 185 836**

**IBM TECHNICAL DISCLOSURE BULLETIN, vol. 17,
no. 10, mars 1975, pages 3016-3018, New York, USA:
R. W. LISSNER et al.: "Disk file actuator"
PATENTS ABSTRACTS OF JAPAN, vol. 6, no. 225(P-
154)(1103), 10 novembre 1982**

(73) Titulaire: **THOMSON- CSF, 173, Boulevard
Haussmann, F-75379 Paris Cedex 08 (FR)**

(72) Inventeur: **Malissin, Roland, THOMSON- CSF SCPI
173, bld Haussmann, F-75379 Paris Cedex 08 (FR)**
Inventeur: **Monlouis, Claude, THOMSON- CSF
SCPI 173, bld Haussmann, F-75379 Paris Cedex 08
(FR)**

(74) Mandataire: **Weinmiller, Jürgen, Lennéstrasse 9
Postfach 24, D-8133 Feldafing (DE)**

## Description

L'invention se rapporte au domaine de l'enregistrement d'informations sur supports lisibles optiquement par un rayonnement concentré et a plus particulièrement pour objet un dispositif optique associé à une tête optique d'écriture-lecture d'un disque optique.

Dans le cas de l'écriture et/ou de la lecture d'un disque de type optique, il est nécessaire:
- d'accéder à une zone du disque,
- de se maintenir dans cette zone avec une bonne précision aussi bien radialement, que perpendiculairement à la surface du disque (focalisation).

Dans les dispositifs de l'art connu une "tête optique" remplit les deux dernières fonctions; elle est composée généralement d'un actuateur ou moteur du type "bobine de haut parleur" permettant le mouvement de focalisation perpendiculairement à la face du disque, et d'un actuateur, permettant le mouvement radial de suivi de piste, constitué soit d'un miroir oscillant, soit dun dispositif de translation pouvant être fixé dans la partie mobile de l'actuateur de focalisation.

L'accès, lui, s'obtient en déplaçant l'ensemble de la "tête optique" soit avec un système de vis et moteur à courant continu ou moteur pas à pas, soit avec un système à moteur et bande. La technique du moteur linéaire employée dans certains disques magnétiques peut être aussi utilisée.

Il est intéressant de pouvoir utiliser l'actuateur d'accès pour effectuer au moins partiellement la poursuite radiale de piste, et cela, en conservant pour cet actuateur un encombrement réduit et une puissance de commande elle aussi réduite.

Les "têtes optiques" utilisées classiquement comportent un ou plusieurs circuits magnétiques permettant les mouvements de focalisation et de poursuite radiale; cela entraîne une masse relativement élevée de ces "têtes optiques" (de l'ordre de 20 à 40 g).

Si l'on désire obtenir une correction au moins partielle de la poursuite radiale avec l'actuateur d'accès, ce dernier ne peut très certainement être que du type moteur linéaire. La masse de la tête optique impose les dimensions et la masse du moteur lineaire d'accès et par suite la puissance de commande de l'actuateur d'accès.

Afin de minimiser les dimensions et aussi par suite la puissance de commandé de l'actuateur d'accès, il apparaît nécessaire de diminuer la masse de la "tête optique". Une solution consiste à rendre fixes les circuits magnétiques de la "tête optique" et donc à ne plus lier à l'objectif mobile que des bobines interagissant avec un champ fixe.

Cependant, deux bobines semblent faire double-emploi: d'une part, la bobine de l'actuateur d'accès qui permet l'accès et une correction partielle de l'écart de piste et, d'autre part, la bobine de l'actuateur de poursuite radiale de piste. Pour ce faire l'invention consiste tout d'abord à éliminer la bobine de poursuite de piste, la bobine d'accès étant alors chargée des deux fonctions d'accès et de poursuite radiale.

Un tel dispositif peut fonctionner mais ses performances, sont limitées par le frottement solide, essentiellement non linéaire, introduit par le guidage de la bobine d'accès, que ce guidage soit effectué à l'aide de moyens en roulement (galets ou roulements à billes) ou de moyens en simple glissement.

Avec un guidage soit en roulement, soit en frottement, effectué directement sur le noyau magnétique central, un tel dispositif permet d'obtenir une précision de suivi de piste de l'ordre de quelques micromètres. Mais dans un disque de type optique, la précision requise est de l'ordre de 0,1 micromètre.

Ainsi un dispositif de l'art connu, décrit dans la demande de brevet européen publiée sous le N° 0 012 650, concerne un dispositif assurant l'asservissement vertical et l'asservissement radial de position par déplacement d'un équipage mobile de très faible poids, ces deux asservissements étant commandés par des courants proportionnels aux déplacements à obtenir. Pour cela, des éléments conducteurs parcourus par les courants de commande sont placés dans un champ magnétique fixe, orthogonal au rayon et s'étendant sur toute la longueur utile du rayon du disque, et se déplaçant dans ce champ magnétique; l'objectif de lecture étant rendu solidaire de ces éléments mobiles.

Cependant, ce dispositif de l'art connu est muni de pièces en glissement dans l'entrefer de son circuit magnétique et présente donc les limitations liées au frottement solide et décrites plus haut.

Il est connu du document FR-A-2 434 457 un dispositif dans lequel il est exigé que l'actuateur d'accès et de poursuite radiale puisse se mouvoir avec peu de friction le long d'un noyau.

Ainsi le fonctionnement correct d'un dispositif mixte d'accès et de suivi de piste est lié essentiellement à son guidage et c'est le dispositif de guidage permettant de pallier ce grave inconvénient de l'art connu qui est l'objet principal de l'invention. Dans le dispositif de l'invention, pour effectuer ce guidage, on conserve le frottement solide, on choisit un guidage par simple glissement et on intercale entre les moyens de glissement et la carcasse de l'actuateur d'accès et de poursuite radiale des éléments présentant une grande souplesse. On utilise de plus pour ce guidage des couples de matériaux présentant un coefficient de frottement minimal.

De plus, la fixation de l'actuateur de focalisation sur l'actuateur radial permet, outre les avantages mécaniques escomptés, d'éviter certains défauts de réaction optique inhérents aux têtes optiques classiques; en effet, qu'il s'agisse d'un système avec miroir radial oscillant ou d'un système avec actuateur radial en translation fixé sur l'actuateur de focalisation, on ne peut éviter complètement d'avoir un déplacement du faisceau optique entrainant soit un effet de diaphragme de la pupille de l'objectif, soit un déplacement ou une ddéformation de la tache optique de retour.

Au contraire dans le cas d'un actuateur de focalisation fixé sur l'actuateur de poursuite radial, ces effets sont inexiatants et un syatème de senseur de poursuite radiale par exemple de type "push-pull" est utilisable.

L'invention a pour objet un dispositif d'accès à une piste portée par un support d'information comportant une tête optique mobile projetant dans une surface de référence dudit support un spot lumineux destiné à interagir avec des éléments adjacents de ladite piste, ladite tête renfermant un objectif de projection dudit spot pouvant se déplacer selon deux directions, l'une normale par rapport à ladite surface, l'autre transversale par rapport auxdits éléments de piste, afin de réalisar respectivement la focalisation précise et le suivi de l'un desdits éléments de piste, ledit dispositif comprenant une nacelle mobile porte-objectif, un élément mobile de guidage de ladite nacelle, celle-ci étant mue selon ladite direction normale par la bobine mobile de premiers moyens actuateurs à circuit magnétique fixe, un organe porteur dudit élémant mobile assurant son guidage selon ladite direction transversale, et des seconds moyens actuateurs comprenant ledit organe porteur dans une partie fixe et une partie mobile appliquant audit élément mobile une force électrodynamique de direction parallèle à ladite direction transversale; ledit élément mobile ayant avec au moins un chemin de guidage dudit organe porteur plusieurs portées à friction, caractérisé en ce que des moyens de fixation souples permettent de relier ces moyens actuateurs et en çe que le lien entre lesdites portées et la partie dudit élément mobile soumise à ladite force électrodynamique est réalisé par des moyens élastiques permettant un déplacement de ladite partie par rapport auxdites portées à friction, au moins dans ladite direction transversale.

L'invention sera mieux comprise et d'autres caractéristiques apparaitront à l'aide de la description qui suit en référence aux figures annexées parmi lesquelles:
- les figures 1 et 2 représentent des vues schématiques d'une tête optique allégée à trois actuateurs;
- les figures 3 à 5 illustrent différents aspects d'une tête optique selon l'invention;
- les figures 6 et 7 illustrent une variante de la tête optique de l'invention;
- les figures 8 à 13 illustrent différents aspects particuliers de l'invention;
- les figures 14 et 15 illustrent le dispositif de guidage de la tête optique selon l'invention;
- les figures 16 à 20 illustrent des variantes de ce dispositif de guidage.

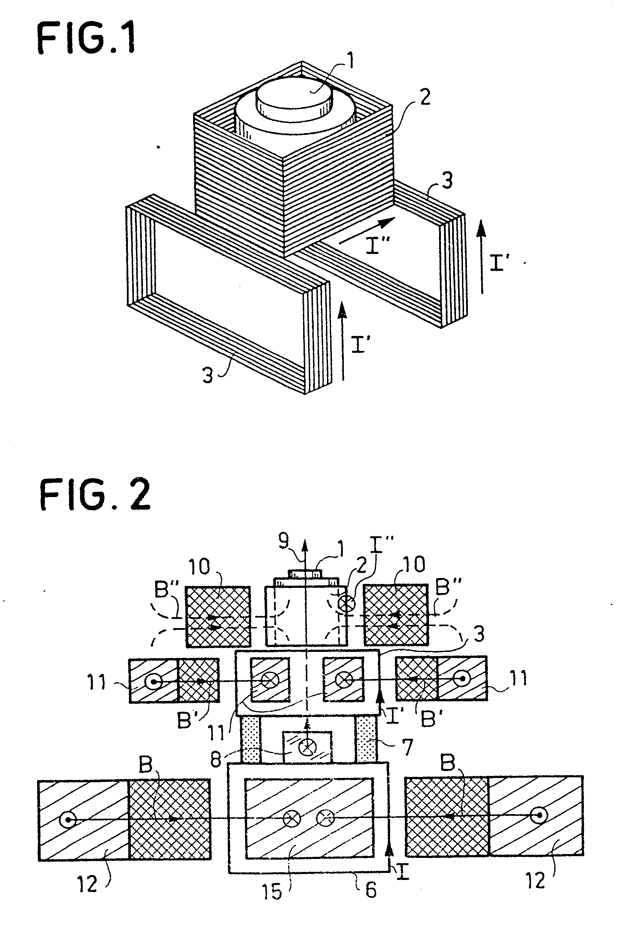

Ainsi afin de minimiser les dimensions et aussi par suite la puissance de commande de l'actuateur d'accès, une amélioration des têtes optiques consiste à diminuer la masse de la "tête optique" en rendant fixes les circuits magnétiques de la "tête optique" et donc en ne liant plus à l'objectif mobile que des bobines magnétiques interagissant avec un champ fixe. Un tel système est décrit sur les figures 1 et 2 qui représentent schématiquement un type de réalisation possible.

La figure 1 illustre une vue en perspective de la tête mobile de focalisation et de poursuite radiale. 1 représente l'objectif, 2 la bobine de focalisation et 3 la bobine de poursuite radiale. Un courant I" parcoure la bobine de focalisation 2, et un courant I' parcoure la bobine de poursuite radiale 3.

Cet ensemble apparait aussi dans la figure 2 dans laquelle la troisième bobine, la bobine d'accès 6, qui est parcouru par un courant I, est représentée.

Une fixation souple radialement et en focalisation relie l'ensemble des deux bobines 2, 3 et l'objectif 1 à la bobine d'accès 6.

12 représente le circuit magnétique du moteur linéaire d'accès. Celui-ci est un ensemble magnétique fixe refermé aux deux extrémités. Il comporte un noyau central 15 avec les directions du champ magnétique B.

Sur cette figure et sur les suivantes les parties hachurées représentent les pièces polaires et les parties quadrillées les aimants.

Il représente le circuit magnétique radial et 10 l'aimant de focalisation.

8 représente le miroir de renvoi sur lequel se réfléchit le faisceau lumineux 9 qui est focalisé par l'objectif 1 pour atteindre le support des informations.

Comme représenté à la figure 2, on utilise préférentiellement deux champs magnétiques B' et B" de mêmes directions.

Cependant, deux bobines semblent faire double-emploi: d'une part, la bobine 6 de l'actuateur d'accès qui permet l'accès et une correction partielle de l'écart de piste et, d'autre part, la bobine 3 de l'actuateur de poursuite radiale de piste. De plus, un tel dispositif parait compliqué à réaliser et par suite peu intéressant. D'où le grand intérêt de l'invention qui consiste à éliminer la bobine 3 de poursuite de piste, la bobine d'accès 6 étant alors chargée des deux fonctions d'accès et de poursuite radiale de piste.

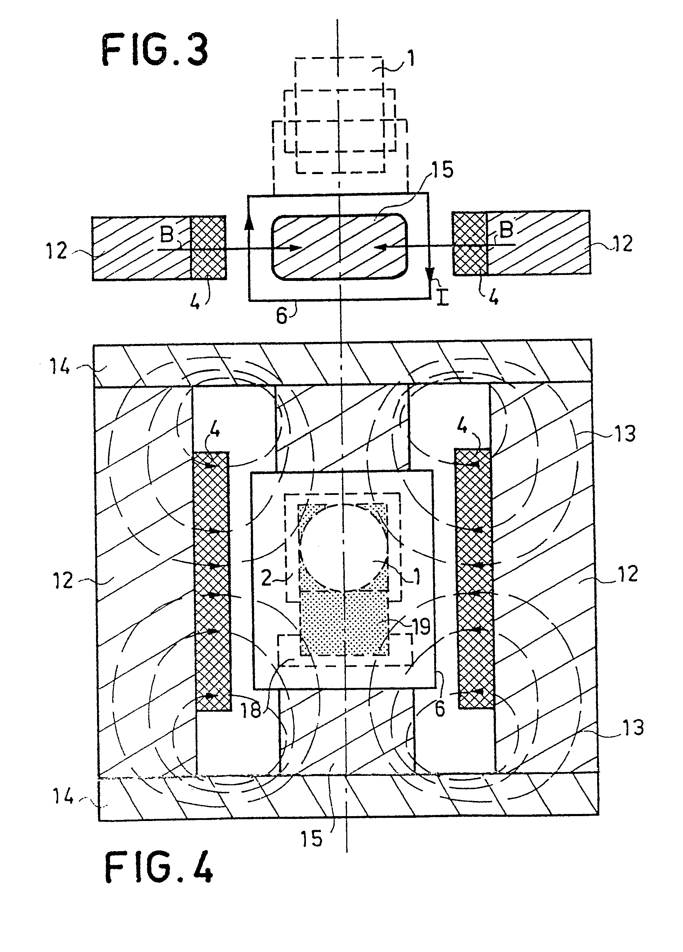

Le système est composé d'un actuateur radial et d'accès sur lequel est fixé l'actuateur de focalisation. Tous les circuits magnétiques sont fixes et de longueur un peu supérieure à la longueur radiale utile du disque, les éléments mobiles sont limités aux composants optiques (fondamentalement l'objectif) et aux bobines des actuateurs. Les deux circuits magnétiques de base sont décrits aux figures 3 et suivantes.

Les figures 3 et 4 illustrent la partie actuateur radial et d'accès.

La figure 3 est une vue schématique en coupe dans laquelle on retrouve l'objectif 1 situé sur l'actuateur de focalisation, le noyau central 15 de l'actuateur radial et d'accès, 4 les aimants droite et gauche et enfin 12 les pièces polaires de cet actuateur. En 6 est représenté la bobine correspondante.

Les mêmes éléments sont représentés à la figure 4 qui est une vue de dessus du dispositif. Les lignes de champ magnétique sont représentées en 13. Les barres 14 permettent la fermeture du champ aux extrémités de cet actuateur. L'actuateur de focalisation qui comporte la bobine 2 et auquel est relié l'objectif 1, est relié au précédent actuateur par l'intermédiaire d'une lame ressort souple 19 encastrée dans un support 18 qui est solidaire de la bobine 6 du précédent actuateur. Cette bobine 6 joue le rôle des précédentes bobines 3 et 6 de la figure 2.

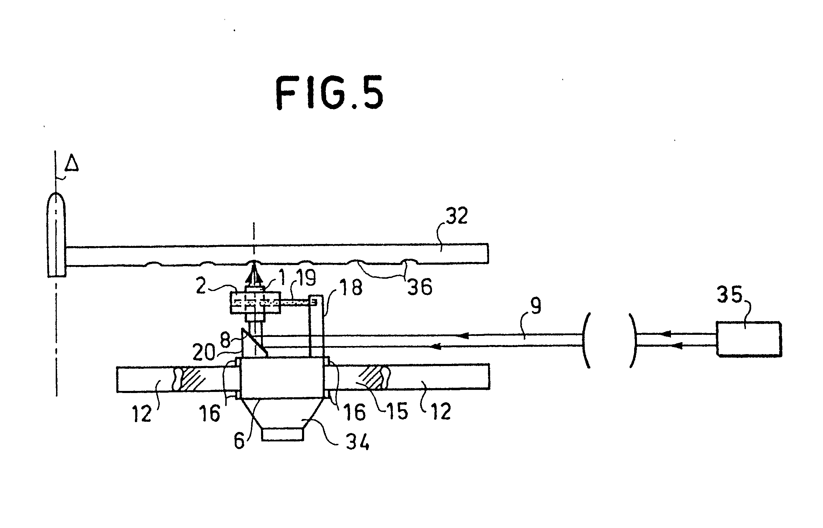

La figure 5 illustre cette partie actuateur radial et d'accès incorporée dans le dispositif complet d'enregistrement-lecture du disque. On retrouve donc en éclaté le noyau central 15 et les pièces polaires 12 de cet actuateur ainsi que l'actuateur de focalisation comportant la bobine 2. Cet actuateur de focalisation auquel est lié l'objectif est relié par l'intermédiaire d'une lame ressort souple 19 encastrée dans un support 18 à la bobine du précédent actuateur. Le miroir 8 est aussi fixé rigidement à l'actuateur radial et d'accès par un support 20.

Le disque 32 qui comporte au moins une piste circulaire ou en spirale est représenté avec des sillons 36, il tourne autour de l'axe △.

Le bloc optique 35 contient une source laser qui produit un rayonnement collimaté 9, qui après réflexion par le miroir 8 est focalisé sur la piste du disque par l'objectif 1; le bloc optique 35 contient aussi tous les composants optiques connus de l'homme de l'art et permettant de recevoir le faisceau de rayonnement réfléchi par le disque, et de le détecter pour générer le signal de lecture d'information, ainsi que les signaux permettant de mesurer l'écart de suivi radial de piste et l'écart de focalisation.

La bobine 6 est représentée ici avec des patins 16, par exemple en caoutchouc, qui permettent le glissement sur le noyau central 15. Une masse déquilibrage de cette bobine 6 est représentée en 34.

Pour simplifier cette figure, le circuit magnétique de focalisation représenté en 10 à la figure 2 a été omis.

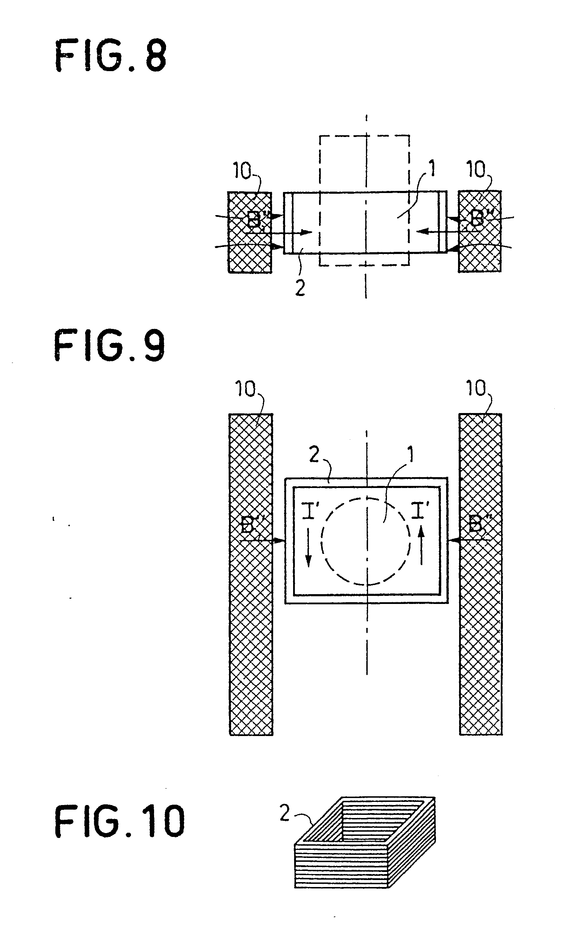

Les figures 8, 9 et 10 représentent la partie actuateur de focalisation avec une bobine 2, des aimants 10 et un objectif 1.

L'élément de focalisation fixé sur l'élément radial et d'accès est fixé de façon souple dans la direction de la focalisation (il présente une fréquence de résonance basse par exemple: 30 Hz). Dans la direction radiale, cette fixation doit conduire à une grande raideur: elle doit présenter une fréquence de résonance élevée, c'est-à-dire située au-delà de la bande du servomécanisme radial, soit de l'ordre de 5 à 10 kHz. Cette condition s'obtient assez facilement avec deux lames parallèles en matériau à fort module d'élasticité, travaillant en flexion pour la focalisation et en compression-extension pour la poursuite radiale. Le rejet à haute fréquence de cette résonance permet d'introduire le filtre de correction de boucle dans une zone de déphasage. En effet en introduisant simplement un filtre d'avance de phase du type résistif-capacitif par exemple, on peut obtenir un servomécanisme du deuxième degré.

Une masse d'inertie supplémentaire est fixée rigidement sur la bobine de poursuite radiale et d'accès du côté opposé à celui où est fixé l'élément de focalisation. Celle-ci est représentée en 34 à la figure 5.

Du fait de l'impossibilité de confondre parfaitement le centre d'application des forces de la bobine de poursuite radiale et d'accès et le centre de gravité de l'équipage mobile complet (bobine de poursuite radiale et d'accès, dispositif de focalisation, masse d'inertie supplémentaire), la force de la bobine de poursuite radiale produit en plus du mouvement de translation radiale, un mouvement de tangage. Pour que ce mouvement de tangage n'interdise pas la fermeture de la boucle d'asservissement radial avec un gain satisfaisant il faut placer le centre de poussée des forces et le centre de gravité de l'équipage de façon que ce tangage donne au niveau du disque un mouvement dans la direction de la translation le plus possible en phase avec cette dernière. C'est le rôle de la masse d'inertie supplémentaire 34 de permettre ce positionnement du centre de gravité.

La masse d'inertie supplémentaire 34 doit être choisie avec une masse aussi faible que possible, permettant donc de ne pas trop diminuer la sensibilité radiale du système, mais permettant cependant de positionner le centre de gravité à l'endroit souhaité. Elle doit donc se présenter comme une structure rigide, fixée rigidement sur la bobine de poursuite radiale, mais avec l'essentiel de sa masse éloigné de cette dernière.

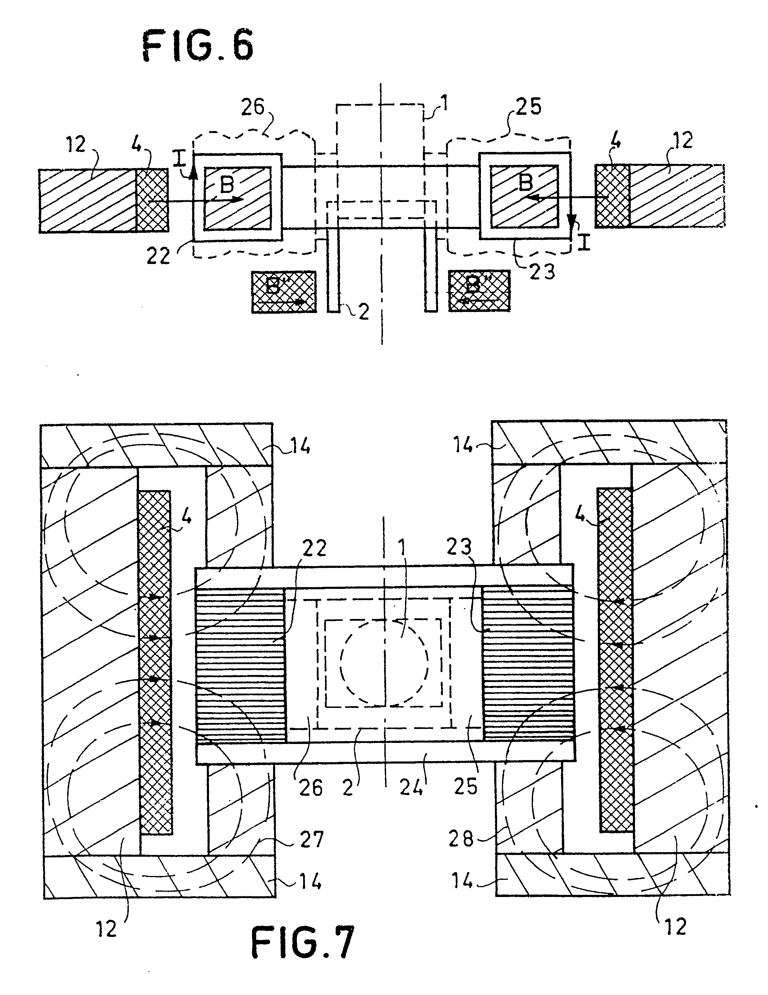

Une variante du présent dispositif est illustrée aux figures 6 et 7 qui correspondent respectivement aux figures 3 et 4. L'actuateur radial et d'accès comporte alors deux noyaux centraux 27 et 28 sur lesquels sont guidées deux bobines 22 et 23. 24 représente une ossature rigide reliant les deux bobines radiales 22 et 23.

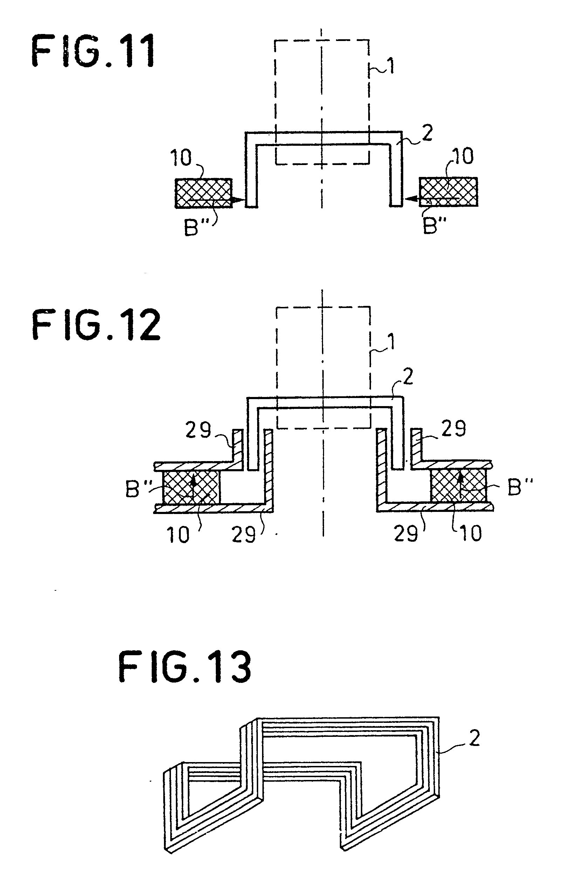

Les autres pièces de l'actuateur radial sont restées les mêmes et sont numérotées de la même façon que précédemment: on retrouve les pièces polaires 12, les aimants 4. On retrouve aussi l'objectif 1. Mais cette fois ci l'actuateur de focalisation est différent; d'une part il est relié aux deux bobines 22 et 23 par l'intermédiaire d'une suspension élastique représentée en 25 et 26, d'autre part il est constitué d'une bobine 2, représentée aux figures 11 et 13, interagissant avec deux aimants 10 représentés à la figure 11.

Une variante de cet actuateur de focalisation est représenté à la figure 12 avec des pièces polaires 29 et des aimants 10.

Pour effectuer le guidage on conserve le frottement solide; on choisit un guidage par simple glissement et l'on intercale entre les moyens de glissement et la carcasse de l'actuateur d'accès et de poursuite radiale des éléments de faible masse présentant une grande souplesse; on utilise de plus pour ce guidage des couples de matériaux présentant un coefficient de frottement minimal.

L'expérience montre que le système permet d'obtenir dans des conditions normales une erreur résiduelle de l'ordre de 0,1 micromètre et même plus faible, donc très nettement inférieure à celle obtenue avec un frottement solide pur.

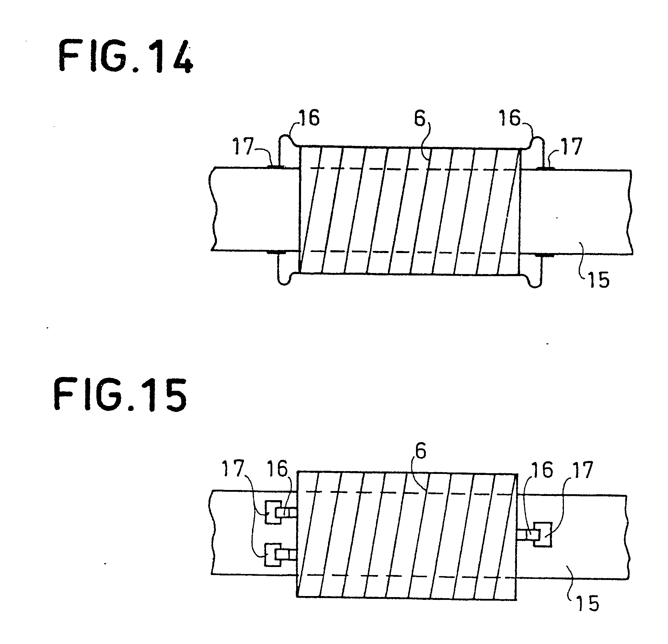

Des modes de réalisation du dispositif suivant l'invention sont représentés aux figures 14 à 20. Sur les figures 14 et 15 de petites pattes élastiques 16 dans la direction radiale (et accessoirement dans la direction de focalisation) sont fixées sur la bobine radiale et d'accès 6 et reposent par leurs extrémités 17) traitées de façon à présenter un faible coefficient de frottement, sur le noyau central 15. Elles glissent ou se déforment sur place suivant la force appliquée à la bobine radiale 6.

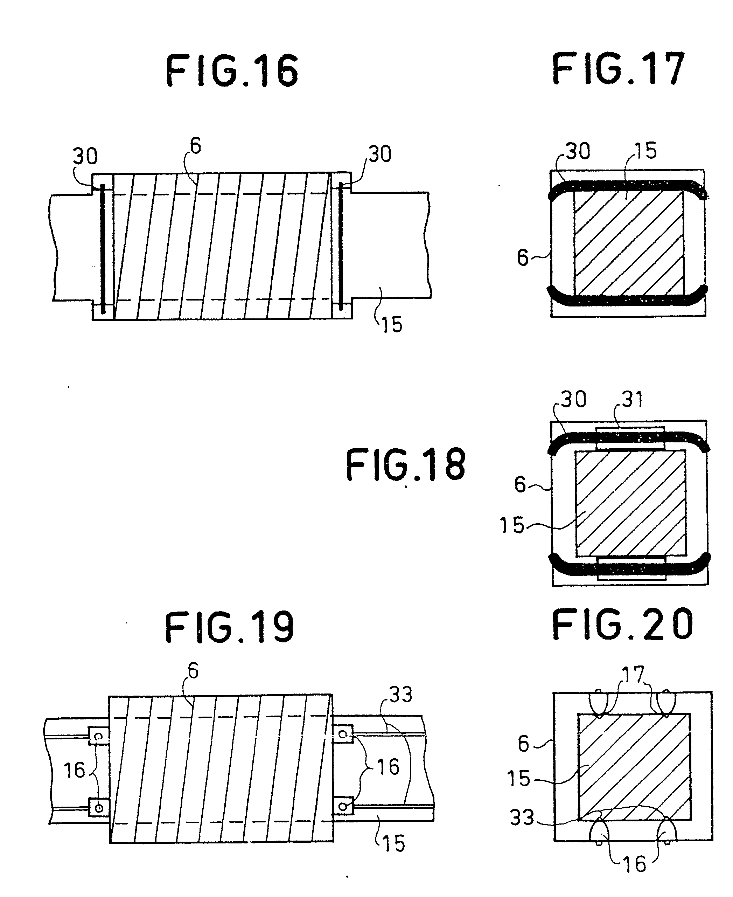

Sur les figures 16, 17 et 18, des brins de caoutchouc 30 de section circulaire sont fixés rigidement sur la bobine radiale et d'accès 6 et reposent en leur partie centrale sur le noyau central 15 du circuit magnétique radial. Ils glissent ou roulent en faisant travailler leurs extrémités en torsion suivant la force appliquée à la bobine radiale 6. Ils peuvent être munis d'un ou plusieurs morceaux de gaine 31 à faible coefficient de frottement dans leur zone d'appui sur le noyau central comme représenté à la figure 18.

La gaine cylindrique entourant le caoutchouc (et parfaitement solidaire du caoutchouc) peut présenter un diamètre extérieur un peu supérieur ou plusieurs fois supérieur à celui de l'axe de caoutchouc.

Sur les figures 19 et 20 de petites pattes élastiques formées de pieds de caoutchouc 16 aux extrémités arrondies 17 sont fixés rigidement sur la bobine radiale et d'accès; ils glissent sur le noyau 15 ou travaillent en flexion suivant la force appliquée à la bobine radiale. Ils glissent, par exemple dans des saignées en V usinées 33 sur noyau 15.

Tout autre dispositif souple, non décrit ici, fixé rigidement sur la bobine 6 et s'appuyant en glissement ou roulement sur le noyau 15 rentre dans le cadre de l'invention.

L'élément de focalisation étant directement soumis à la force de focalisation, la réponse de son mouvement aux hautes fréquences reste en inverse carré de la fréquence malgré la souplesse de la suspension de la bobine radiale. Par conséquent, il ne se pose pas le problème de correction de boucle, le déphasage ne dépassant pas.

Le système décrit ci-dessus est tout particulièrement adapté au cas où l'optique d'enregistrement-lecture est divisée en deux parties: une partie fixe comportant les sources de lumière et les senseurs et une partie mobile, la "tête optique", comportant les actuateurs et l'objectif auxquels il faut adjoindre un miroir de renvoi qui permet d'envoyer vers l'objectif le faisceau lumineux provenant de la partie fixe de l'optique, et réciproquement de renvoyer vers la partie fixe de l'optique le faisceau réfléchi par le disque et provenant de l'objectif. C'est ce cas qui a été choisi pour décrire l'invention.

Il peut cependant être employé dans une tête compacte simplifiée et spécialement dans le cas d'un lecteur seul dont l'optique peut être plus facilement allégée; dans ce cas l'ensemble de l'optique est situé sur le moteur radial et d'accès; l'objectif servant à la focalisation sur le disque peut, pour présenter une masse réduite être réalisé sous la forme d'une monolentille asphérique ou d'une lentille holographique.

Le laser est un laser à semi-conducteur et les éléments optiques sont réduits à leurs plus petites dimensions possibles.

A titre d'exemple, les actuateurs décrits peuvent être commandés par l'électronique suivante:

La focalisation peut être réalisée, par exemple, par des circuits comportant une correction proportionnelle et par dérivation et éventuellement par intégration.

La poursuite de piste peut être réalisée, par exemple, par des circuits comportant une correction proportionnelle par dérivation et par intégration et éventuellement le circuit d'amplification du signal d'erreur peut présenter une non linéarité correspondant à un gain plus élevé pour les petits signaux.

L'accès à la piste du disque peut être réalisé, par exemple, par une commande gérée par microprocesseur avec asservissement de vitesse.

## Revendications

1. Dispositif d'accès à une piste portée par un support d'information comportant une tête optique mobile projetant dans une surface de référence dudit support un spot lumineux destiné à interagir avec des éléments adjscents de ladite piste; ladite tête renfermant un objectif de projection dudit spot pouvant se déplacer selon deux directions, l'une normale par rapport à ladite surface, l'autre transversale par rapport auxdits éléments de piste, afin de réaliser respectivement la focalisation précise et le suivi de l'un desdits éléments de piste, ledit dispositif comprenant une nacelle mobile porte-objectif, un élément mobile de guidage de ladite nacelle, celle-ci étant mue selon ladite direction normale par la bobine mobile de premiers moyens actuateurs à circuit magnétique fixe, un organe porteur dudit élément mobile assurant son guidage selon ladite direction transversale, et des seconds moyens actuateurs comprenant ledit organe porteur dans une partie fixe et une partie mobile appliquant audit élément mobile une force électrodynamique de direction parallèle à ladite direction transversale; ledit élément mobile ayant avec au moins un chemin de guidage dudit organe porteur plusieurs portées à friction, caractérisé en ce que des moyens de fixation souples permettent de relier ces moyens actuateurs et en ce que le lien entre lesdites portées et la partie dudit élément mobile (6, 18, 24) soumise à ladite force électrodynamique est réalisé par des moyens élastiques (16, 30) permettant un déplacement de ladite partie par rapport auxdits portées (17, 31) à friction, au moins dans ladite direction transversale.

2. Dispositif selon la revendication 1, caractérisé en ce que le centre d'inertie dudit élément mobile (6, 18, 24) et des éléments qui y sont attachés (2, 8, 11, 19, 20, 22, 23, 25, 26) et le centre de poussée de ladite force sont disposés de façon à ce que le tangage donne au niveau dudit support d'information un mouvement dans ladite direction tranversale le plus possible en phase avec cette dernière.

3. Dispositif selon l'une quelconque des revendications 1 et 2, caractérisé en ce que ledit élément. mobile (6, 18, 24) et ladite nacelle (2) ont pour seul lien mécanique une suspension flexible (19, 25, 26), souple dans ladite direction normale et raide dans ladite direction transvarsale.

4. Dispositif selon la revendication 2, caractérisé en ce que ladite force est produite par deux éléments moteurs (22, 23).

5. Dispositif selon la revendication 3, caractérisé en ce que ladite suspension (19, 25, 26) comporte au moins une lamelle flexible (19) encastrée à une extrémité dans ledit élément mobile (6, 18) et portant à l'autre extrémité ladite nacelle (2).

6. Dispositif selon l'une quelconque des revendications 3 et 5, caractérisé en ce que ladite suspension comporte deux lames parallèes travaillant en flexion dans ladite direction normale.

7. Dispositif selon l'une quelconque des revendications 3, 4 et 5, caractérisé en ce que ladite nacelle (2) est encadrée par des éléments élastiques (25, 26) de ladite suspension.

8. Dispositif selon l'une quelconque des revendications précédentes, caractérisé en ce que lesdites portées (17) ont au moins trois points de contact avec ledit chemin de guidage (33) disposés en triangle; ledit organe porteur ayant une face portante à laquelle appartiennent ces trois points de contact.

9. Dispositif selon l'une quelconque des revendications précédentes, caractérisé en ce que ledit organe porteur (12, 14, 15) comporte au moins un élément prismatique (15, 27, 28) dont l'axe est parallèle à ladite direction transversale.

10. Dispositif selon la revendication 9, caractérisé en ce que ledit organe porteur (12, 14, 27, 28) comporte deux éléments prismatiques (27, 28) parallèles qui encadrent ledit élément mobile (24).

11. Dispositif selon l'une quelconque des revendications 9 et 10, caractérisé en ce que deux faces opposées dudit élément prismatique (15) forment deux chemins de guidage (35) pour lesdites portées à friction (17).

12. Dispositif selon l'une quelconque des revendications précédentes, caractérisé en ce que lesdits moyens élastiques (16, 30) comprennent des jambages élastiques (16) dont les premières extrémités correspondent auxdites portées (17) et les secondes extrémités sont ancrées à ladite partie d'organe mobile (6).

13. Dispositif selon l'une quelconque des revendications 1 à 11, caractérisé en ce que lesdits moyens élastiques (16, 30) comprennent des brins élastiques (30) ancrés à leurs extrémités à ladite partie d'organe mobile (6); lesdites portées (31) étant situées entre lesdites extrémités.

14. Dispositif aelon la revendication 13, caractérisé en ce que lesdites portées sont matérialisées par un gainage (31) desdits brins (30).

15. Dispositif selon l'une quelconque des revendications 1 et 12 à 14, caractérisé en ce que lesdits moyens élastiques (30) sont en élastomère.

16. Dispositif selon la revendication 15, caractérisé en ce que lesdites portées (31, 17) sont en matériau à faible coefficient de frottement.

17. Dispositif selon la revendication 16, caractérisé en ce que lesdites portées (31) sont assurées par des moyens de roulement (31) à rappel élastique par torsion desdits moyens élastiques (30).

18. Dispositif selon l'une quelconque des revendications précédentes, caractérisé en ce que ladite force électrodynamique est produite par des moyens électriquement conducteurs (6, 22, 23) plongés dans un champ magnétique fixe (B) de direction perpendiculaire auxdites directions.

19. Dispositif selon la revendication 18, caractérisé en ce que le déplacement de ladite nacelle (2) dans ladite direction normale est assurée par des moyens moteurs supplémentaires (2, 10) produisant une autre force électrodynamique.

20. Dispositif selon la revendication 19, caractérisé en ce que l'autre force électrodynamique est produite par des moyens électriquement conducteurs (2) plongés dans un autre champ magnétique (B'').

21. Dispositif selon la revendication 20, caractérisé en ce que lesdits champs magnétiques (B, B'') sont créés par des moyens inducteurs fixes (4, 10, 12) et en ce que lesdits moyens électriquement conducteurs sont des portions de bobines (2, 6, 22, 23) plongées dans des entrefers appartenant auxdits moyens inducteurs; lesdites bobines étant respectivement solidaires de ladite nacelle (2) et dudit élément mobile (6, 18, 24).

22. Dispositif selon la revendication 21, caractérisé en ce que ledit organe porteur (15) entre dans la composition desdits moyens inducteurs fixes (4, 10, 12).

23. Dispositif selon la revendication 22, caractérisé en ce que ledit organe porteur comporte au moins un barreau aimanté (15, 27, 28) encerclé par l'une desdites bobines.

24. Dispositif selon l'une quelconque des revendications précédentes, caractérisé en ce que l'émission du rayonnement lumineux éclairant ladite surface et la détection du rayonnement qui a interagi avec ladite piste sont localisées dans ladite tête optique.

25. Dispositif selon l'une quelconque des revendications 1 à 24, caractérisé en ce que l'émission du rayonnement lumineux éclairant ladite surface et la détection du rayonnement qui a interagi avec ladite piste sont localisés à poste fixe; ladite tête optique contenant un miroir de renvoi (8).

26. Dispositif selon la revendication 1, caractérisé en ce que lesdits moyens élastiques (16, 30) autorisent en outre un déplacement de ladite partie dans une direction normale par rapport à ladite surface de référence en réponse à une force ayant cette direction.

## Patentansprüche

1. Vorrichtung zum Zugriff auf eine Informationsträgerspur mit einem beweglichen optischen Kopf, der auf eine Bezugsoberfläche des Trägers einen Lichtpunkt wirft, der mit nebeneinanderliegenden Elementen der Spur interagieren soll, wobei der Kopf ein Projektionsobjektiv für diesen Lichtpunkt einschließt, der in zwei Richtungen verschiebbar ist, nämlich einer Richtung senkrecht zu der Oberfläche und einer Richtung transversal bezüglich der Spurelemente, um die genaue Brennweiteneinstellung bzw. die Verfolgung eines der Elemente der Spur zu bewirken, wobei die Vorrichtung eine bewegliche Objektivträgergondel, ein bewegliches Führungselement für diese Gondel, die gemäß der genannten senkrechten Richtung von einer beweglichen Spule eines ersten Betätigungsmittels mit feststehendem Magnetkreis bewegt wird, ein Tragorgan für das bewegliche Element, das seine Führung gemäß der genannten Transversalrichtung sicherstellt, und ein zweites Betätigungsmittel aufweist, das das Tragorgan in einem feststehenden Bereich und einem beweglichen Bereich umfaßt, der auf das bewegliche Element eine elektrodynamische Kraft in einer Richtung parallel zu der transversalen Richtung ausübt, wobei das bewegliche Element mit mindestens einem Führungsweg des Tragorgans mehrere Reibungsauflager besitzt, dadurch gekennzeichnet, daß nachgiebige Befestigungsmittel die Verbindung der Betätigungsmittel erlauben und daß die Verbindung zwischen den Auflagern und dem Teil des beweglichen Elements (6, 18, 24), das der elektrodynamischen Kraft unterliegt, durch elastische Mittel (16, 30) erfolgt, die eine Verschiebung dieses Teils bezüglich der Reibungsauflager (17, 31) zumindest in der transversalen Richtung erlauben.

2. Vorrichtung nach Anspruch 1, dadurch gekennzeichnet, daß das Trägheitszentrum des beweglichen Elements (6, 18, 24) und der damit verbundenen Elemente (2, 8, 11, 19, 20, 22, 23, 25, 26) und das Angriffezentrum der Kraft so angeordnet sind, daß die Stampfbewegung in Höhe des Informationsträgers eine Bewegung in der transversalen Richtung ergibt, die möglichst phasenrein mit dieser ist.

3. Vorrichtung nach einem beliebigen der Ansprüche 1 und 2, dadurch gekennzeichnet, daß das bewegliche Element (6, 18, 24) und die Gondel (2) nur über eine flexible Aufhängung (19, 25, 26), die in der senkrechten Richtung nachgiebig und steif in der transversalen Richtung ist, miteinander mechanisch verbunden sind.

4. Vorrichtung nach Anspruch 2, dadurch gekennzeichnet, daß die Kraft von zwei Motorelementen (22, 23) erzeugt wird.

5. Vorrichtung nach Anspruch 3, dadurch gekennzeichnet, daß die Aufhängung (19, 25, 26) mindestens eine flexible Lamelle (19) enthält, die mit einem Ende in dem beweglichen Element (6, 18) eingeklemmt ist und am anderen Ende die Gondel (2) trägt.

6. Vorrichtung nach einem beliebigen der Ansprüche 3 und 5, dadurch gekennzeichnet, daß die Aufhängung zwei parallele Lamellen aufweist, die in der senkrechten Richtung auf Biegung beansprucht werden.

7. Vorrichtung nach einem beliebigen der Ansprüche 3, 4 und 6, dadurch gekennzeichnet, daß die Gondel (2) von elastischen Elementen (25, 26) der Aufhängung eingerahmt ist.

8. Vorrichtung nach einem beliebigen der vorhergehenden Ansprüche, dadurch gekennzeichnet, daß die Auflager (17) mindestens drei Berührungspunkte mit dem Führungsweg (33) besitzen, die im Dreieck angeordnet sind, wobei das Tragorgan eine tragende Fläche besitzt, der diese drei Berührungspunkte angehören.

9. Vorrichtung nach einem beliebigen der vorhergehenden Ansprüche, dadurch gekennzeichnet, daß das Tragorgan (12, 14, 15) mindestens ein prismatisches Element (15, 27, 28) enthält, dessen Achse parallel zur transversalen Richtung verläuft.

10. Vorrichtung nach Anspruch 9, dadurch gekennzeichnet, daß das Tragorgan (12, 14, 27, 28) zwei parallele prismatische Elemente (27, 28) aufweist, die das bewegliche Element (24) einrahmen.

11. Vorrichtung nach einem beliebigen der Ansprüche 9 und 10, dadurch gekennzeichnet, daß zwei einander gegenüberliegende Seiten des prismatischen Elements (15) zwei Führungswege (33) für die Reibungsauflager (17) bilden.

12. Vorrichtung nach einem beliebigen der vorhergehenden Ansprüche, dadurch gekennzeichnet, daß die elastischen Mittel (16, 30) elastische Arme (16) aufweisen, deren erste Enden den Auflagern (17) entsprechen und deren zweite Enden an dem Teil des beweglichen Organs (6) verankert sind.

13. Vorrichtung nach einem beliebigen der Ansprüche 1 bis 11, dadurch gekennzeichnet, daß die elastischen Mittel (16, 30) elastische Glieder (30) enthalten, die an ihren Enden an dem Teil des beweglichen Organs (6) verankert sind, wobei die Auflager (31) zwischen diesen Enden liegen.

14. Vorrichtung nach Anspruch 13, dadurch gekennzeichnet, daß die Auflager von einer Umhüllung (31) der elastischen Glieder (30) gebildet werden.

15. Vorrichtung nach einem beliebigen der Ansprüche 1 und 12 bis 14, dadurch gekennzeichnet, daß die elastischen Mittel (30) aus einem Elastomer hergestellt sind.

16. Vorrichtung nach Anspruch 15, dadurch gekennzeichnet, daß die Auflager (31, 17) aus einem Material mit niedrigem Reibungskoeffizienten bestehen.

17. Vorrichtung nach Anspruch 16, dadurch gekennzeichnet, daß die Auflager (31) durch Rollmittel (31) gebildet werden, die elastisch durch eine Torsion der elastischen Mittel (30) vorgespannt sind.

18. Vorrichtung nach einem beliebigen der vorhergehenden Ansprüche, dadurch gekennzeichnet, daß die elektrodynamische Kraft von elektrisch leitenden Mitteln (6, 22, 23) erzeugt wird, die in ein festes Magnetfeld (B) eingetaucht sind. dessen Richtung senkrecht zu den genannten Richtungen verläuft.

19. Vorrichtung nach Anspruch 18, dadurch gekennzeichnet, daß die Verschiebung der Gondel (2) in der senkrechten Richtung durch zusätzliche Motormittel (2, 10) bewirkt wird, die eine weitere elektrodynamische Kraft erzeugen.

20. Vorrichtung nach Anspruch 19, dadurch gekennzeichnet, daß die weitere elektrodynamische Kraft von elektrisch leitenden Mitteln (2) erzeugt wird, die in ein weiteres Magnetfeld (B'') eingetaucht sind.

21. Vorrichtung nach Anspruch 20, dadurch gekennzeichnet, daß die Magnetfelder (B, B'') von festen Induktormitteln (4, 10, 12) erzeugt werden und daß die elektrisch leitenden Mittel Spulenabschnitte (2, 6, 22, 23) sind, die in zu den Induktormitteln gehörende Luftspalte eingetaucht sind, wobei die Spulen mit der Gondel (2) bzw. dem beweglichen Element (6, 18, 24) fest verbunden sind.

22. Vorrichtung nach Anspruch 21, dadurch gekennzeichnet, daß das Tragorgan (15) Teil der festen Induktormittel (4, 10, 12) ist.

23. Vorrichtung nach Anspruch 22, dadurch gekennzeichnet, daß das Tragorgan mindestens einen magnetisierten Stab (15, 27, 28) enthält, der von einer der Spulen umkreist ist.

24. Vorrichtung nach einem beliebigen der vorhergehenden Ansprüche, dadurch gekennzeichnet, daß die Aussendung der Lichtstrahlung, die die Oberfläche beleuchtet und die Erfassung der Strahlung, die mit der Spur interagiert hat, im optischen Kopf erfolgt.

25. Vorrichtung nach einem beliebigen der Ansprüche 1 bis 24, dadurch gekennzeichnet, daß die Aussendung der Lichtstrahlung, die die Oberfläche beleuchtet und die Erfassung der Strahlung, die mit der Spur interagiert hat, an einem festen Ort lokalisiert sind, wobei der optische Kopf einen Umlenkspiegel (8) enthält.

26. Vorrichtung nach Anspruch 1, dadurch gekennzeichnet, daß die elastischen Mittel (16, 30) außerdem eine Verschiebung des genannten Teils in einer senkrechten Richtung bezüglich der Bezugsoberfläche abhängig von einer in dieser Richtung wirkenden Kraft zulassen.

**Claims**

1. A device for accessing to a track provided on an information support, comprising a movable optical head which projects on a reference surface of said support a light spot conceived to interact with adjacent elements of said track, said head including a lens for projecting said spot and movable according to two directions, one of them being normal with respect to said surface and the other transversal with respect to said track elements, in order to realise the exact focalisation and the following-up of one of said track elements respectively, said device comprising a movable nacelle for bearing the lens, a movable element for guiding said nacelle, the latter being displaced according to said normal direction by the movable coil of first actuator means with stationary magnetic circuit, a member for bearing said movable element ensuring its guidance along said transversal direction, and second actuator means comprising said member in a stationary part and a movable part applying to said movable element an electrodynamic force along a direction parallel to said transversal direction, said movable element having with at least one guidance path of said member several friction cushions, characterized in that resilient fixing means are conceived to connect these actuator means, and that the link between said cushions and that part of said movable element (6, 18, 24) submitted to the electrodynamic force is realised by elastic means (16, 30) allowing said part to be displaced with respect to said friction cushions (71, 31) at least along said transversal direction.

2. A device according to claim 1, characterized in that the inertia center of said movable element (6, 18, 24) and of the elements attached thereto (2, 8, 11, 19, 20, 22, 23, 25, 26) and the pressure center of said force are disposed such that the chopping produces at the level of said information support a movement in said transversal direction which is as closely as possible in phase with this latter.

3. A device according to any one of claims 1 and 2, characterized in that said movable element (6, 18, 24) and said nacelle (2) are mechanically coupled only by a flexible suspension (19, 25, 26) which is resilient along said normal direction and stiff along said transversal direction.

4. A device according to claim 2, characterized in that said force is produced by two motor elements (22, 23).

5. A device according to claim 3, characterized in that said suspension (19, 25, 26) includes at least one flexible blade (19) which is held at one end in said movable element (6, 18) and which bears at the other end said nacelle (2).

6. A device according to any one of claims 3 and 5, characterized in that said suspension includes two parallel blades which are flexible along said normal direction.

7. A device according to any one of claims 3, 4 and 6, characterized in that said nacelle (2) is framed by resilient elements (25, 26) of said suspension.

8. A device according to any one of the preceding claims, characterized in that said cushions (17) are in contact with said guidance path (33) via at least three contact points disposed in a triangle, said support member having a bearing surface to which belong the three contact points.

9. A device according to any one of the preceding claims, characterized in that said support member (12, 14, 15) includes at least one prismatic element (15, 27, 28), the axis of which is parallel to said transversal direction.

10. A device according to claim 9, characterized in that said support member (12, 14, 27, 28) includes two parallel prismatic elements (27, 28) framing said movable element (24).

11. A device according to any one of claims 9 and 10, characterized in that two opposite surfaces of said prismatic element (15) constitute two guidance paths (33) for said friction cushions (17).

12. A device according to any one of the preceding claims, characterized in that said elastic means (16, 30) include elastic legs (16), the first ends of which correspond to said cushions (17) and the second ends of which are anchored at said part of the movable member (6).

13. A device according to any one of claims 1 to 11, characterized in that said elastic means (16, 30) include elastic rods (30) anchored with their ends at said part of the movable member (6), said cushions (31) being situated between these ends.

14. A device according to claim 13, characterized in that said cushions are realised by a sheathing (31) of said rods (30).

15. A device according to any one of claims 1 and 12 to 14, characterized in that said elastic means (30) are made of an elastomer material.

16. A device according to claim 15, characterized in that said cushions (31, 17) are made of a material having a low friction coefficient.

17. A device according to claim 16, characterized in that said cushions (31) are ensured by rolling means (31) which are elastically charged by torsion of said elastic means (30).

18. A device according to any one of the preceding claims, characterized in that said electrodynamic force is produced by electrically conducting means (6, 22, 23) dipped into a fixed magnetic field (B), the direction of which is perpendicular to said directions.

19. A device according to claim 18, characterized in that the displacement of said nacelle (22) along said normal direction is ensured by additional motor means (2, 10) producing a further electrodynamic force.

20. A device according to claim 19, characterized in that the further electrodynamic force is produced by electrically conducting means (2) dipped into a further magnetic field (B'').

21. A device according to claim 20, characterized in that said magnetic fields (B, B'') are created by stationary inductor means (4, 10, 12), and that said electrically conducting means are portions of coils (2, 6, 22, 23) dipped into gaps belonging to said inductor means; said coils belonging respectively to said nacelle (2) and said movable element (6, 18, 24).

22. A device according to claim 21, characterized in that said support member (15) belongs to said stationary inductor means (4, 10, 12).

23. A device according to claim 22, characterized in that said support member comprises at least a magnetised rod (15, 27, 28) which is surrounded by said coils.

24. A device according to any one of the preceding claims, characterized in that the emission of the light radiation illuminating said surface and the detection of the radiation which has interacted with said track are localized in said optical head.

25. A device according to any one of claims 1 to 24, characterized in that the emission of the light radiation illuminating said surface and the detection of the radiation which has interacted with said track are localised at a stationary post, said optical head containing a reflection mirror (8).

26. A device according to claim 1, charasterized in that said elastic means (16, 30) further allow said part to be displaced in a normal direction with respect to said reference surface in reply to a force having that direction.

# FIG.1

# FIG. 2

FIG.3

FIG.4

# FIG.5

# FIG.6

# FIG.7

# FIG. 8

# FIG. 9

# FIG. 10

## FIG.11

1

2

10

10

B"

B"

## FIG.12

1

2

29

29

B"

B"

10

29

29

10

## FIG.13

2

# FIG.14

# FIG.15

# FIG.16

# FIG.17

# FIG.18

# FIG.19

# FIG.20